(19) Europäisches Patentamt
European Patent Office
Office européen des brevets

(11) **EP 2 354 096 B1**

(12) **EUROPEAN PATENT SPECIFICATION**

(45) Date of publication and mention
of the grant of the patent:
**20.08.2014 Bulletin 2014/34**

(51) Int Cl.:
**C02F 3/12** *(2006.01)*     **C02F 11/14** *(2006.01)*
**C02F 1/78** *(2006.01)*     **C02F 3/30** *(2006.01)*

(21) Application number: **11153356.8**

(22) Date of filing: **04.02.2011**

(54) **A method and a plant for reducing sludge produced in a water purification process**

Verfahren und Anlage zur Schlammreduzierung in einem Wasseraufbereitungsverfahren

Procédé et installation pour réduire les boues générées dans un procédé de purification de l'eau

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2010 IT MI20100187**

(43) Date of publication of application:
**10.08.2011 Bulletin 2011/32**

(73) Proprietor: **Prominent Italiana S.R.L.**
**38015 Lavis (Trento) (IT)**

(72) Inventors:
• **Peluso, Andrea**
  **38015, LAVIS (TRENTO) (IT)**

• **Andreottola, Gianni**
  **38015, LAVIS (TRENTO) (IT)**
• **Foladori, Paola**
  **38100 Trento (IT)**
• **Menapace, Veronica**
  **38015, LAVIS (TRENTO) (IT)**

(74) Representative: **Corradini, Corrado**
**Ing. C. Corradini & C. S.r.l.**
**Via Dante Alighieri 4**
**IT-42121 Reggio Emilia (IT)**

(56) References cited:
**EP-A1- 0 645 347     EP-A1- 0 881 195
EP-A1- 2 070 878     WO-A1-2008/042769**

**Description**

The invention relates to a method and a plant for reducing sludge produced in the process of water purification in civil or industrial contexts.

As is known, treatment with activated sludge in conventional purification plants leads to an increase in the biomass because of the metabolic process involved. The biomass accumulates in the excess sludge together with the inert solids present in the wastewater in inlet. In order for the activated sludge process to function correctly, the excess sludge (sludge line) must be continuously removed from the system such that the sludge age internally of the water line is kept constant.

The destiny of the excess sludge produced in purification plants is a modernday concern, not only in Italy but throughout Europe, for several reasons, among which are the following:

- continuous increase in the production of sludge as a consequence of the progressively more aggressive treatment required in order to guarantee quality of final water product;
- exclusion of some alternatives for using the dehydrated sludge (tipping, agriculture...) under Community regulations;
- increase in costs for end disposal of sludge.

Sludge production in Europe is estimated to have grown by 40% between 1998 and 2005, reaching about 9.4 million tonnes per year (dry mass estimation), and should reach 10 million per annum by 2010. The trend is similar in the United States, where about 6.9 million tonnes per annum is estimated for 2005, rising to 7.4 million tonnes by 2010.

Up to now the most widely-applied solutions in Europe for final disposal of dehydrated sludge have been:

a) re-utilisation in agriculture (47%); this is a positive solution for exploitation of easily-assimilable organic substances, but has recently been under threat due to the European orientation which seeks to limit use of sludge in agriculture due to concern the toxic or dangerous substances which might be present in sludge, even in small amounts, and which might be susceptible to bioaccumulation in the food chain;

b) waste disposal (21 %): this alternative will be downsized in the near future as a consequence of the European standards orientation (directive on waste disposal 1999/31/EC), which is aimed at preventing landfill disposal of refuse having high organic content, giving preference to inert refuse;

c) incineration (20%): it is predicted that this alternative will be progressively more widely adopted, with use of drying and/or heat-reduction systems for sludge, with an inevitable and consequent rise in disposal costs.

The future prospects are therefore for a progressive increase in costs for final disposal of sludge.

Already, at international level, the average cost for treatment plus disposal of sludge is up to 63.4 Euro per tonne moist weight, corresponding to 317 €/t dry weight (25-65% of the total working cost of purification plants).

In this context, the possibility of minimising the production of sludge directly at the origin assumes a greater relevance, i.e. at the purification plant, by recourse to technologies integrated with the water line or the sludge line, before reaching the final disposal stage of residual sludge.

Among the possible technologies, a very promising solution is constituted by the ozonisation of the sludge in order to promote lysis and facilitate biodegradability, thus contributing to the reduction of the dry mass. Cellular lysis, induced by breakdown of the microbic cells following ozonisation, causes release of the cellular constituents, which are then oxidised biologically in bioreactors of the water line or the sludge line, thus obtaining an effective reduction in the mass of the final sludge.

Ozonisation has already been proposed and applied in sludge reduction in various international experiments, but has shown itself to have a number of points of weakness, especially due to the high cost of providing oxygen gas for production of ozone and also due to the difficulty of effectively injecting the ozone internally of the process.

The aim of the present invention is to obviate the above-cited drawbacks with a method and a plant for reducing the sludge produced during the process of purification of waters, which exploits the ozonolysis process.

A further aim of the invention is to achieve the above-cited result in a way which is practical and economical.

The aims are attained primarily thanks to a method for reducing sludge produced in the water purification process according to claim 1.

This solution has the advantage of avoiding use of pure oxygen contained in canisters, thus reducing supply costs of the gas and increasing operating safety and ease of management of the process at the plant which can be activated or deactivated simply, without there being any need to manage oxygen stocks, which also involve certain aspects of risk and danger.

A further important advantage is that each stage of ozone injection has its own peculiarity, with regard to the transfer of the ozone into the liquid mass, to the eventual combined process of mechanical breakdown, and to the specific difficulties arising (for example formation of foam internally of the reaction tank). These three injection modalities can therefore be modulated and varied according to needs, with regard to the single ozone dosing for single modes, as well as with regard to their temporal order; this gives rise to various process mode alternatives and contributes to the versatility of the overall system.

In a further advantageous aspect of the method, the specific overall dosage of ozone is predicted to be less than 50 $mgO_3/gTSS_{product}$.

Such low doses enable:

- reduction to a minimum of the ozone quota wasted in oxidation of the sludge compounds already solubilisable with low dosages, and full optimisation of the quota used for forming soluble compounds internally of the sludge which are able to increase the efficiency of the subsequent biological treatments to which the sludge is subjected;
- impacting as little as possible on the nitrifying biomass (which is more sensitive to the activated sludge process) which normally is organised in clusters representing a protection in a case of low ozone doses, while the disturbance caused by the ozone on the heterotrophic biomass is irrelevant to the activated sludge process since the heterotrophic populations are less sensitive and are present in the activated sludge system in quantities that are considerably greater than the nitrifying quantities.

In a further advantageous aspect of the method, the specific overall-dosage of ozone is obtained with single micro-doses of ozone, each in the order of 8-10 $mgO_3/gTSS_{treated}$, and the sludge is subjected to these micro-doses several times during the sludge age.

In this way the sludge is advantageously subjected to a stress frequency 3 to 4 times during its life, which improves the efficiency of the overall process.

In a further advantageous aspect of the method, sludge-conditioning chemical products are dosed upstream of the ozone injection, which are able to increase the efficiency of the process of sludge reduction by ozone.

These doses can advantageously be applied continuously or occasionally according to the sludge to be treated, to the efficiencies required for reduction or in order to meet changed conditions internally of the purification process.

In a further advantageous aspect of the method, a stage of intermittent nitrification and denitrification is comprised in the activated sludge tank by regulation of the blowers, which stage can be performed either manually or automatically by a timer or on the basis of having reached $N-NH_4$, $N-NO_3$, $O_2$ or pH parameters, monitored by in-line probes.

The combination of the two processes (ozonolysis and intermittent nitrification-denitrification) is able to increase the efficiency of the reduction process of the sludge.

The present invention further comprises a plant for reduction of the sludge produced in the water purification process according to claim 6.

Further characteristics and advantages of the invention will emerge from a reading of the following description, which is provided by way of non-limiting example, with the aid of the figures illustrated in the accompanying tables of drawings, in which:

- figure 1 is an illustrative design of a first variant of the invention;
- figure 2 is an illustrative design of a variant out of the scope of the invention;
- figure 3 is an illustrative design of a further variant of the invention;
- figure 4 is illustrative design of a further variant out of the scope of the invention;
- figure 5 is a diagram representing the degree of solubilisation of the sludge obtained by ejector ozonisation under depression;
- figure 6 is a diagram showing the progress of the degree of solubilisation of the sludge according to the dose of ozone;
- figure 7 is a diagram showing the progress of the degree biodegradable COD in the sludge obtained by ejector ozonisation under depression;
- figure 8 is a diagram showing a comparison between fractions of COD in sludge which is not ozonised and ozonised sludge;
- figure 9 is a diagram representing the progress of the degree of solubilisation of the sludge according to the ozone dosage performed using a micro-bubble diffuser;
- figure 10 is a diagram representing the progress of the degree of solubilisation of the sludge according to the dosage of ozone performed using the microbubble diffuser on varying the height of the liquid column with a same ozone dosage;
- figure 11 shows the Kremser-Sounders-Brown diagram relating to the efficiency of transference of a mass of gas into a liquid; and
- figure 12 is a diagram illustrating the degree of percentage autotrophic and heterotrophic bacteria inhibition according to the dose of ozone.

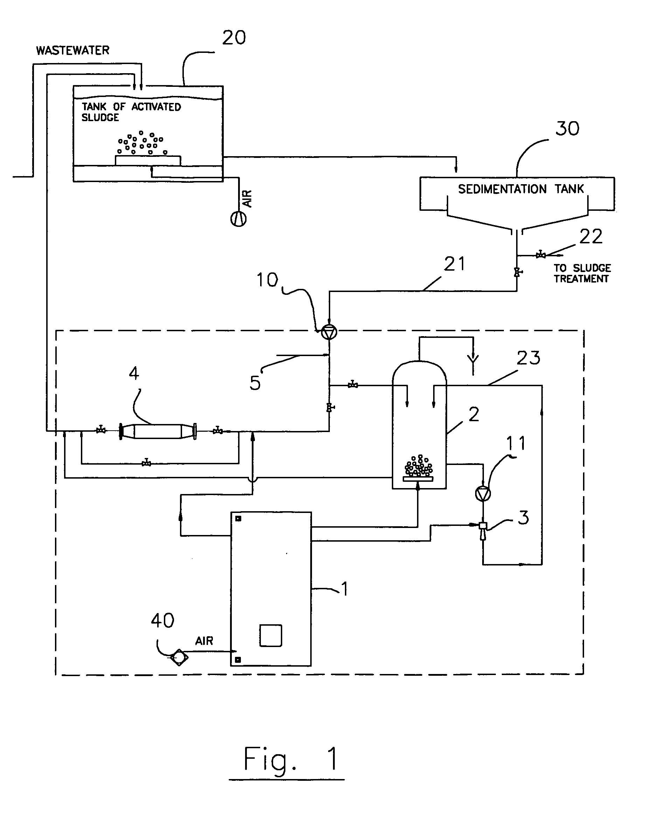

A first preferred embodiment of the plant for reducing sludge produced in the purification process of waters is visible in figure 1, in an upper part of which the conventional activated sludge purification system is schematically represented with the oxidation tank 20 and a final sedimentation tank 30.

The rectangle defined by a broken line represents a first realisation of the plant of the invention.

An activated-sludge recycling line (water line 21) derives from the sedimentation tank 30, which line is provided with a recycling pump 10. The line 21 derives in a part which is directed to a contact reactor with a micro-bubble diffuser 2 and a part directed to an in-line static mixer 4.

The reaction tank with micro-bubble diffuser 2 can be constituted by a stainless steel tank, possibly internally coated with an ozone-resistant epoxy paint, and provided with a support plate for micro-bubble diffusers composed of five layers of metal tissues sintered together. Sintering is a combined temperature-pressure process in which molecular cohesion of the layers is attained in special sterile furnaces.

Microbubble diffusers have a mesh filtration rated at $\leq$ 5 micron and are made of an ozone-resistant material such as stainless steel type AIS1316L and AISI 904L.

Further, a recycling line 23 is comprised, provided with a booster pump 11 and a Venturi depression ejector 3, to enhance a recycling flow line branching from the contact reactor 2.

The ozone is produced, starting directly from an air source 40, internally of a generator 1, which can be constituted by an oxygen-enricher upstream of the ozone generation columns.

A dosing element 5 of conditioning chemical products can be located on the branch directed to the static mixer 4.

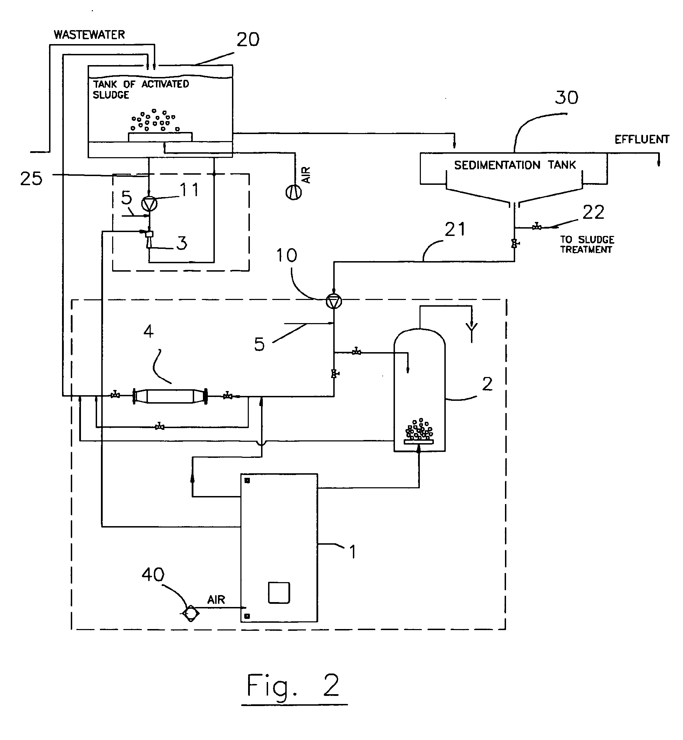

A further variant out of the scope of the invention of the plant for reduction of sludge can be seen in figure 2.

This variant includes obtaining a predetermined flow to the system via the pump 11 from the activated sludge tank 20 with the pump 11 and using the venturi ejector 3, possibly associating a respective dosing element 5 of conditioning chemical products.

The other elements are similar to those for the variant of figure 1.

In this case the ozone injection is done on both the sludge recycling line, by the microbubble contact reactor 2 and by direct in-line injection with the static mixer 4, and by obtaining, along a line 25, a predetermined flow from the activated sludge tank with the pump 11 and using the venturi ejector 3.

The positioning of the ejector on the water line by extraction of the flow to be treated directly from the activated sludge tank (figure 2) enables passage of a fluid internally of the ejector, which fluid is characterised by a smaller concentration of solids with respect to the flow branched from the sludge recycling flow and thus a smaller probability of fouling or clogging of the ejector. Further, in the variant of figure 2 it is possible to continue to operate with the ozonolysis process even in a case in which for some reason the hydraulic recycling line of the sludge were not operating.

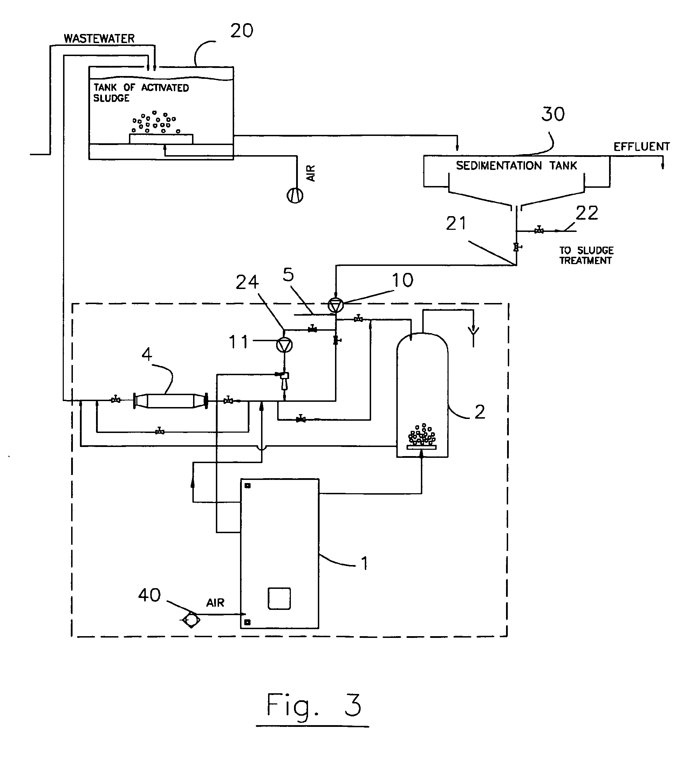

A further preferred embodiment of the plant for reduction of sludge is illustrated in figure 3.

In this variant, an activated-sludge recycling line is derived from the sedimentation tank 30, which recycling line is provided with a recycling pump 10. The line branches, with a part directed to a contact reactor with a microbubble diffuser 2 and a part directed to an in-line static mixer 4.

Further, upstream of the mixer 4 there is a further line 25, provided with a booster pump 11 and a respective venturi ejector 3, for enhancing a further flow derived directly from the sludge line.

In this case, the injection of ozone is performed only on the sludge recycler, but the venturi ejector 3 is located on a branch derived directly from the sludge line. Further, the flow to be sent on to the microbubble reactor 2 can be taken either upstream or downstream of the ozone injection via the venturi ejector 3. The other elements of the system are similar to the variant of figure 1.

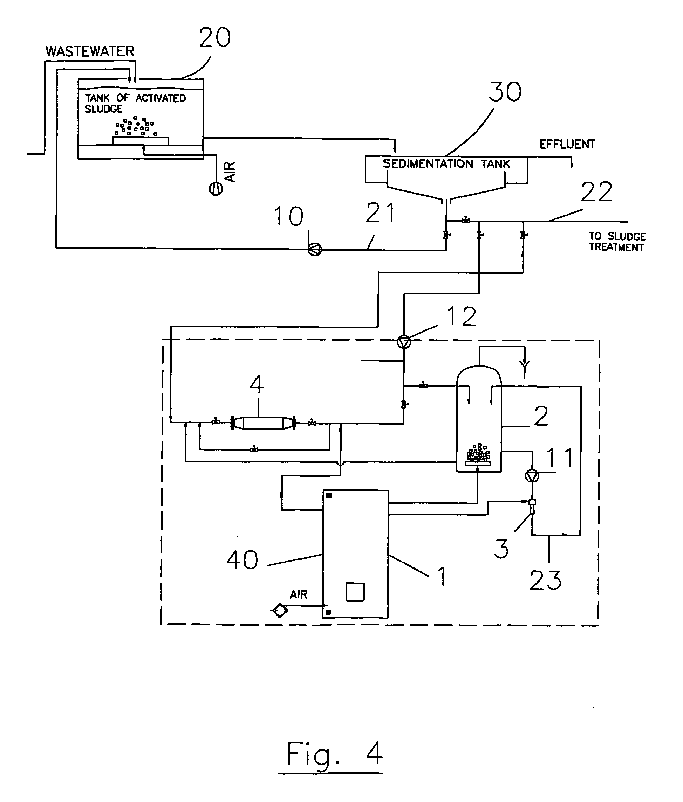

A further variant out of the scope of the invention of the plant for reduction of sludge can be seen in figure 4.

In this variant, a flow is derived from the sedimentation tank 30, from the flow directed to the sludge treatment line. The flow is collected via a special pump 12 and is directed to the ozone treatment.

The other components are similar to those represented in figure 1. Alternatively a plant can be used the components of which are configured as in figure 3.

As previously mentioned, in all cases the generation of ozone starts directly from air internally of the generator 1, which can be constituted by an oxygen-enricher upstream of the ozone generation columns.

As industrially-produced oxygen stored in high-pressure canisters is not necessary, there is the double advantage of a considerable economic saving and furthermore high plant safety levels are guaranteed.

The ozone generated internally of the producer is injected into the system in three points, completely different from one another and able to operate either singly or contemporaneously, i.e:

the depressed ejector or venturi ejector system 3;
the micro-bubble diffuser 2;
direct injection under pressure with the in-line static mixer 4.

In the method, the specific total dosage of ozone is less than 50 mgO$_3$/gSST $_{product}$.

In more detail, the specific total ozone dosage is obtained with single micro-doses of ozone, each of the order of 8 to 10 mgO$_3$/gSST $_{treated}$, and the sludge is subjected to the micro-doses several times during the life of the sludge.

This operative solution is obtained by specially modulating the flow of sludge sent to the ozonisation treatment and by using multi-point dosing (in the three above-mentioned devices) such as to further fraction the overall dosage into micro-doses.

The venturi ejector system 3 guarantees high transfer efficiency as well as a mechanical action on the sludge which is due to the sharp narrowing and subsequent broadening, with a hydro-dynamic cavitation effect.

Laboratory tests have been carried out to determine the degree of solubilisation of the sludge using the venturi ejector 3 system.

The degree of solubilisation of the COD (Chemical Oxygen Demand) is expressed as:

$$S_{COD}(\%) = \%COD_{soluble} = \frac{COD_{S,T} - COD_{S,0}}{COD_{TOT,0} - COD_{S,0}} * 100$$

COD$_{S,0}$ = soluble COD of the untreated sludge;

COD$_{S,T}$ = soluble COD after ozonolysis;

COD$_{TOT,0}$= total COD of the untreated sludge;

this evidences the percentage of the soluble COD that is released by the ozone treatment.

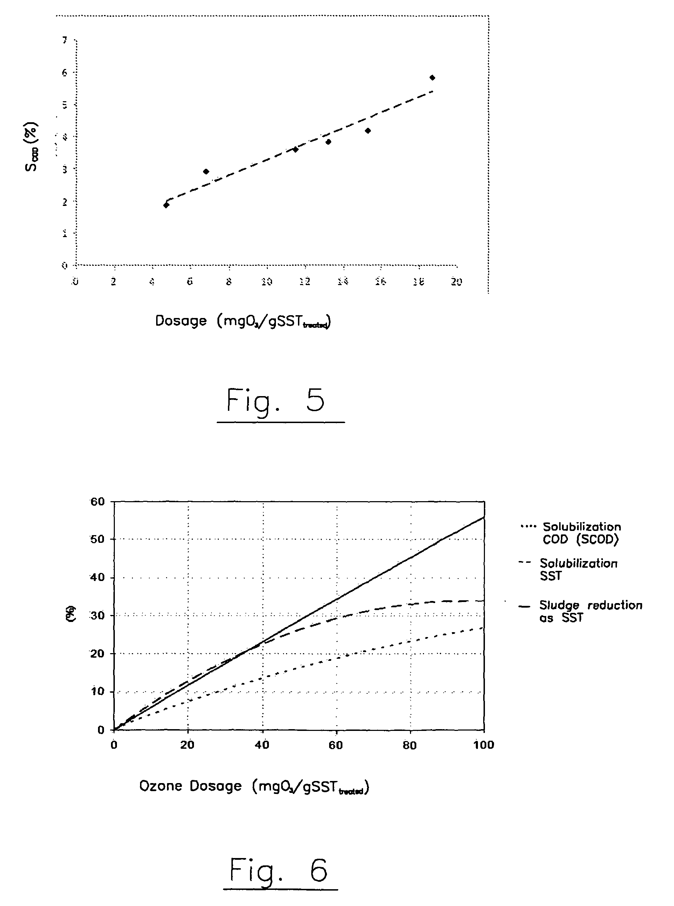

In the case under examination (as can be seen in figure 5), there is an increase in the soluble COD following the treatment, which practically linearly increases with the increase in the applied dosage. This can be attributed to a cellular lysis action and a disintegration of the biological floc, which grows together with the dosage used. Finally the increase in the soluble COD, correlated to the disintegration of the suspended solid, causes a reduction in the SST.

As can be seen in figure 5, also for low doses of ozone (less than 20 mgO$_3$/gSST $_{treated}$) or with micro-doses (of the order of 8-10 mgO$_3$/gSST $_{treated}$) appreciable increases in soluble COD are obtained. One would expect that on the increase of the solubilisation of the sludge there would be a corresponding significant reduction in the sludge. Indeed, soluble COD is constituted by a biodegradable fraction which is immediately removed from the activated sludge after the ozonised sludge is recycled in the biological reactors and a non-biodegradable fraction that is released in modest quantities together with the effluent.

Thanks to the solubilised COD made available by lysis of the sludge in the present ozonisation process it is possible to perform nitrification and denitrification with greater efficiency intermittently in the activated sludge tank. Figure 6 reports a comparison between solubilisation and reduction of the sludge via ozonisation, obtained by interpolating the data in the literature from 2000 to 2009.

In figure 6, by "SST solubilisation", what is meant is the degradation of the sludge exiting the ozonisation reactor (contact reactor), while the "reduction of sludge such as SST) is a result of the integration between ozonolysis treatment and the water line.

It is observed that for doses of above 30 MgO$_3$/gSST$_{treated}$ the SST solubilisation no longer increases linearly as a part of the ozone is used for oxidising the compounds in the solution, rather than proceeding with the disintegration of the aggregates. Above this threshold the ozonisation treatment becomes less effective and economically less sustainable. The biodegradable solubilised compounds retain a part of the dosed ozone, while they might be oxidised at low cost in the biological tanks as a result of microbic activity.

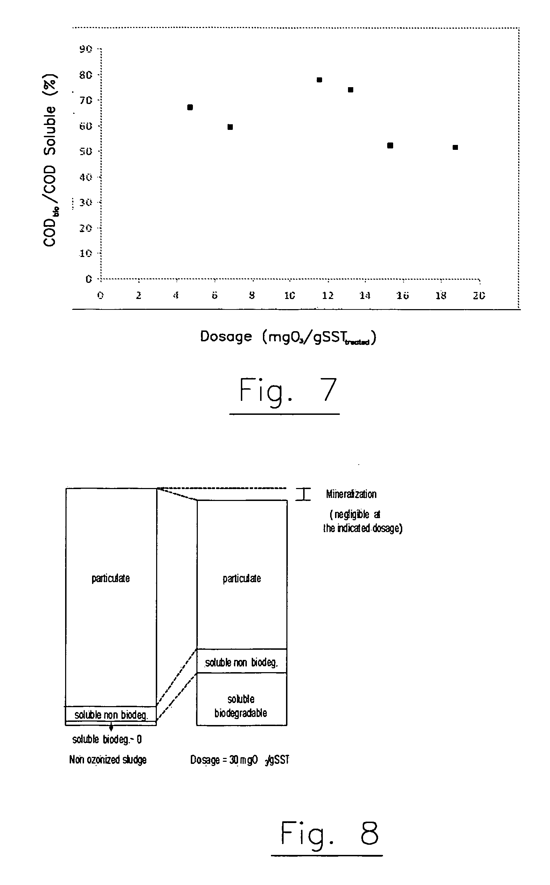

As for the biodegradable fraction of the sludge produced by ozonolysis, laboratory tests using ejectors produced the results reported in figure 7.

The results show a more-or-less constant ratio of the COD$_{bio}$ to the COD$_{soluble}$ in a range from 51.7-77.9%.

The soluble COD represents both biodegradable and non-biodegradable compounds, and thus the degree of solubilisation is always greater than the biodegradation ratio.

Figure 8 illustrates a representative diagram of the composition of the sludge before and after the ozonisation treatment (considering the COD fractions).

Oxygenation tests were carried out to determine the efficiency of oxygenation (efficiency of transfer of SOTE oxygen) in clean water for the microbubble aeration system in a laboratory-scale reactor.

The testing modes for the oxygenisation in clean water and the processing of the experimental data were carried out following the ATV guidelines.

In the case under examination, SOTE was measured at 11.6% in a liquid height of 0.7 metres and SOTE of 19.7% was measured in a 2-metre water column. These values lie in the high SOTE range of the diffusers normally known in the literature. The microbubble diffusion system made up of 5 layers of sintered-together metal mesh thus combines high material resistance to the aggression of the ozone with a high gas transfer efficiency level in liquid, making it ideal for the present process.

Tests were also carried out on the microbubble diffuser to determine the degree of sludge solubilisation at laboratory level.

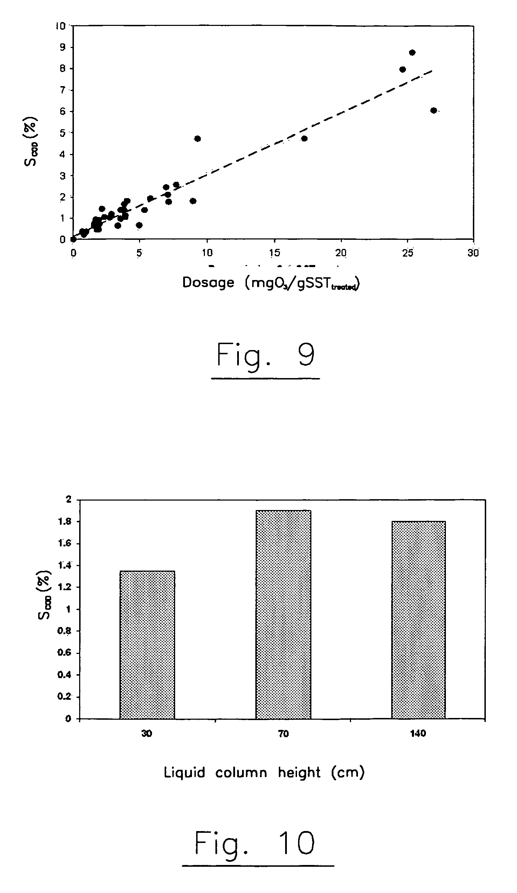

A comparison of figure 5 with figure 9 reveals that the data are comparable, and this means that the efficiency of the ozonisation of the sludge is similar between the venturi depression system and the micro-bubble diffuser system. Thus the two systems can be used one after the other, should this be required.

In the reaction tank the height of the liquid column is lower than one metre as increases in efficiency of the ozonisation process were not seen on increasing the parameter; in particular the majority of the transfer of the ozone into the mass of sludge via the above-described diffusers occurs within the first 70 cm. This aspect, which represents an innovation in the sludge ozonisation process (given that in other cases contact reactors are used with heights of up to 5-6 metres), is further guaranteed by the low micro-doses applied, which facilitate an immediate and rapid action and consumption of the ozone in the sludge.

Further, the reaction tank is possibly provided with a system for preventing or containing the foams created on the surface. Thanks to the possibility of modulating the ozone-enriched air flow transferred to the reaction tank with the microbubble diffuser 2 it is however possible to contain the formation of foam. Finally, the air outflowing from the reaction tank is possibly conveyed to a thermo-catalytic or activated-charcoal residual ozone destroyer.

The static mixer for direct injection of pressurised ozone must be such as to guarantee a turbulent flow regime for a homogeneous mixture of the ozone into the sludge, thus maintaining pressure loss between upstream and downstream of the mixer at 0.5 bar.

Thanks to the contemporaneous use of the three injection systems, to the substantial difference between them (injection under depression, microbubble diffusion and direction injection under pressure with the static mixer) and to the possibility of regulating the flow of ozone to the single point of injection, the whole process can be varied according to the real conditions in which operations are being carried out. It is therefore clear that the operating variations become manifold while the basic principle of the present invention is left unaltered.

The choice of three different injection stages is supported by the Kremser-Sounders-Brown diagram relating to the efficiency of transfer of a mass of gas into water or a liquid.

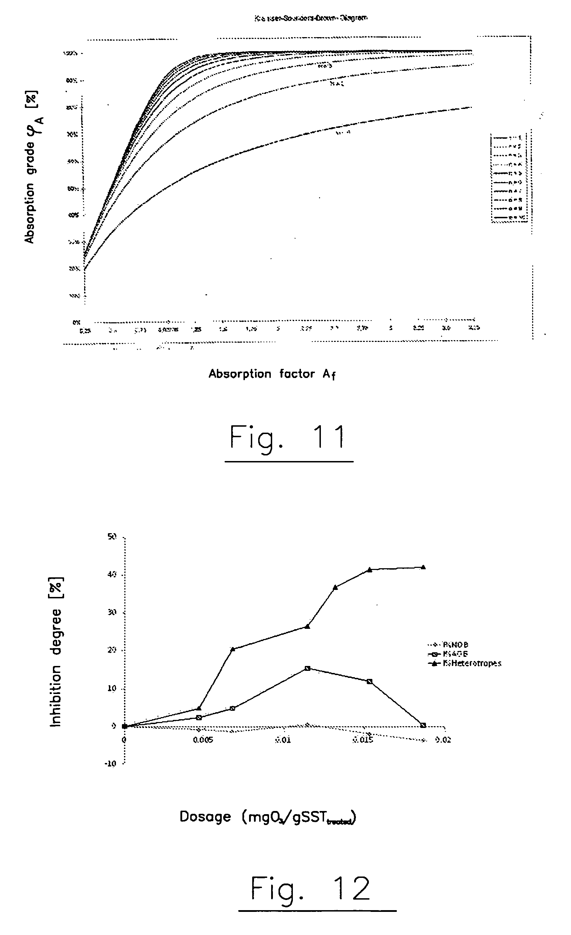

In this diagram (figure 11) it is seen how the transfer efficiency of the gas into the liquid, all other conditions being equal (pressure, gas flow, water flow etc.) considerably increases passing from 1 to 2 stages of injection and from 2 to 3 stages, while beyond three the increase in efficiency is small and no longer such as to justify introduction of a further stage of gas injection, which would lead to an increase in economic costs and technical and management complications. From the same graph it can be observed how it is possible to maintain a good level of transfer efficiency even in the case of having to carry out maintenance to one injection step and therefore functioning only on the other two.

Upstream of the three points of ozone injection it is possible to dose conditioning chemical products 5 such as for example acids for lowering the pH of the sludge and for consequently increasing the concentration of ozone in the liquid phase or oxygenated water in order to develop an intense oxidation combined with ozone (advanced oxidation).

These doses can be continuously or occasionally administrated at the discretion of the operator and according to the type of sludge to be treated, the reduction efficiencies required or in order to deal with changed conditions internally of the purification process. The dosing is done by batching pump and it is possible to do it either manually or automatically.

The specific overall dose of ozone is less than 50 $mgO_3/gSST_{product}$.

As this is the overall dose, i.e. the sum of the single doses at the three injection points, it is clear that the dose at the single point will be much lower, on average about 10 $MgO_3/gSST_{treated}$.

As shown in figures 5, 7 and 9, thanks to the use of such low doses it is possible:

to reduce to a minimum the quota of ozone wasted due to oxidation of the sludge;
to optimise the quota used for solubilising the sludge and increasing the solubilised COD and for increasing the effectiveness of the successive biological treatments to which the sludge will be subjected;
not to damage the nitrifying biomass such as to conserve its functionality.

As a demonstration of the last above statement, tests were carried out to observe the progress of the velocity of consumption of the substrate both in the ozone-treated sludge and in the untreated sludge. The experiment was done using a respirometric technique for calculating the degree of inhibition (I) of the following bacteria groups:

$$I_{heterotropes}\ (\%) = \left(1 - \frac{velocity_{heterotropes\_treated\_sludge}}{velocity_{heterotropes\_untreated\_sludge}}\right) * 100$$

$$I_{NOB} \ (\%) = \left(1 - \frac{velocity_{NOB\_treated\_sludge}}{velocity_{NOB\_untreated\_sludge}}\right) * 100$$

$$I_{AOB} \ (\%) = \left(1 - \frac{velocity_{AOB\_treated\_sludge}}{velocity_{AOB\_untreated\_sludge}}\right) * 100$$

in which AOB and NOB are the following reactions:

$$2NO_2^- + O_2 \rightarrow 2NO_3^-$$

Nitrite Oxidizing Bacteria (NOB)

$$2NH_4^+ + 3O_2 \rightarrow 2NO_2^- + 2H_2O + 4H^+$$

Ammonia Oxidizing Bacteria (AOB).

The following results were obtained:

Starting from the nitrifying bacteria and more specifically from the bacteria responsible for the oxidation of the nitrites to nitrates (NOB) , progression of around zero obtains. As there is experimental error to take into consideration, it can be assumed that there is no inhibition to bacterial activity involving the second stage of nitrification.

Considering the bacteria responsible for the first stage of nitrification (AOB), an increase in inhibition is noted, which is however contained within a maximum value of 14%. In any case by maintaining the dose of ozone at around 20 to 30 $mgO_3/gSST_{treated}$ the inhibition on the nitrifying biomass can be considered irrelevant. For the heterotrophic bacteria, on the other hand, responsible for the oxidation of the carbon substrate, a gradual increase in the inhibition was noted, which is the cause of the lysis or permeabilisation of the bacterial cells, with a consequent release of intra-cellular compounds and successive biodegradation in the biological reactors, contributing to a reduction in the sludge produced.

Thanks to the solubilised COD placed at the disposal by the lysis of the sludge thanks to the present ionisation process, it is possible to perform the nitrification/denitrification alternatingly in the activated sludge tank with greater efficiency.

Depending on the single cases, and where possible, a combination of the two processes (ozonolysis and nitrification-denitrification in alternation).

The combination of the ozonolysis process of the present invention and the Apart from increasing the efficiency of removal of the nitrogen, the nitrification-denitrification in alternation in the activated sludge tank also increases the efficiency of the sludge reduction.

Obviously numerous modifications or improvements dictated by contingent or special motives can be brought to the invention as it is described herein, without its forsaking the ambit of protection as set out in the following claims.

## Claims

**1.** A method for reducing sludge produced in a water purification process, comprising the following activities:

- conveying the water to be purified in a activated sludge tank (20),
- conveying the sludge from the activated sludge tank (20) to a sedimentation tank (30),
- producing an ozone-enriched gas starting from air,
- subjecting a first part of the sludge from the sedimentation tank (30) to action of the ozone-enriched gas in a first injection point by means of a direct in line injection upstream of a static mixer (4)
- subjecting a second part of the sludge from the sedimentation tank (30) to action of the ozone-enriched gas in a second injection point by means of a microbubble diffuser (2) having a mesh filtration rated at $\leq$ 5 micron in a reaction tank (2) with a liquid surface level which is lower than 1 metre and a contact time which is less than 5 minutes;
- subjecting the second part of the sludge from the sedimentation tank (30) to further action of the ozone-enriched gas in a third injection point by means of a venturi ejector (3), provided in a recycling line (23) of the-sludge contained in the reaction tank (2), or

- subjecting the first part of the sludge from the sedimentation tank (30) to further action of the ozone-enriched gas in a third injection point by means of a venturi ejector (3), provided in a line (24) branching from the line from the sedimentation tank and joining the line to the static mixer upstream the direct in line injection.
- the ozone dosage being less than 50 mgO3/gTSS produced, preferably 30 mgO3/gTSS produced.
- returning the treated sludge to the activated sludge tank (20).

2. The method of claim 1 **characterised in that** the specific overall dosage of ozone required is obtained with single micro-doses of ozone, each in the order of 8-10 $mgO_3/gTSS_{treated}$, and the sludge is subjected to the micro-doses several times during the sludge age.

3. The method of claim 1, wherein an ozone-enriched gas is injected upstream of the action of the static mixer.

4. The method of claim 1, **characterised in that** during the action of the static mixer injections of conditioning chemical products are performed in the sludge which are able to increase the efficiency of the reduction process of the sludge using ozone.

5. The method of claim 1, **characterised in that** a stage of intermittent nitrification and denitrification is comprised in the activated sludge tank in order to reach the desired parameters of $N-NH_4$, $N-NO_3$, $O_2$ or pH, monitored by in-line probes.

6. A plant configured for carrying out the method of claim 1 comprising:

- an activated sludge tank (20),
- a sedimentation tank (30) connected downstream of the activated sludge tank,
- means (10, 21) for sending the sludge in outlet from the sedimentation tank to a reaction tank (2) and a static mixer (4) being arranged in parallel to the reaction tank (4),
- the reaction tank comprising a micro-bubble diffuser having a mesh filtration rated at < 5 micron, and a sludge recycling conduit comprising a Venturi ejector (3),
- means (1) for producing an ozone-enriched gas from air;
- means for supplying ozone-enriched gas, respectively to upstream the static mixer (4), to the Venturi ejector (3) and to the micro-bubble diffuser of the reaction tank (2).
- means for returning the sludge from the reaction tank and from the static mixer to the activated sludge tank.

7. The plant of claim 6, **characterised in that** it comprises at least three different injection devices of ozone-enriched gas, being a contact reactor with a microbubble diffuser, a venturi-type ejector and a static mixer. -

**Patentansprüche**

1. Verfahren zur Verminderung von Schlamm, der in einem Wasseraufbereitungsprozess erzeugt wird, folgende Tätigkeiten umfassend:

- Befördern des aufzubereitenden Wassers in einen Belebtschlamm-Tank (20),
- Befördern des Schlamms von dem Belebtschlamm-Tank (20) zu einem Sedimentierungstank (30),
- Erzeugen eines mit Ozon angereicherten Gases aus Luft,
- Einwirkenlassen des mit Ozon angereicherten Gases auf einen ersten Teil des Schlamms aus dem Sedimentierungstank (30) an einem ersten Eindüsungspunkt mittels einer Inline-Direkteindüsungsvorrichtung prozessaufwärts von einem statischen Mischer (4),
- Einwirkenlassen des mit Ozon angereicherten Gases auf einen zweiten Teil des Schlamms aus dem Sedimentierungstank (30) an einem zweiten Eindüsungspunkt mittels eines Mikroblasen-Diffusors (2) mit einer Maschenfiltrationsrate von $\leq 5$ Mikrometer in einem Reaktionstank (2) mit einem Flüssigkeitsstand, der niedriger als 1 m ist, und einer Kontaktzeit, die weniger als 5 min beträgt,
- weiteres Einwirkenlassen des mit Ozon angereicherten Gases auf den zweiten Teil des Schlamms aus dem Sedimentierungstank (30) an einem dritten Eindüsungspunkt mittels einer Venturi-Ausstoßvorrichtung (3), die in einer Rückführleitung (23) des im Reaktionstank (2) enthaltenen Schlamms bereitgestellt ist, oder
- weiteres Einwirkenlassen des mit Ozon angereicherten Gases auf den ersten Teil des Schlamms aus dem Sedimentierungstank (30) an einem dritten Eindüsungspunkt mittels einer Venturi-Ausstoßvorrichtung (3), die in einer Leitung (24) bereitgestellt ist, die von der Leitung vom Sedimentierungstank abzweigt und in die Leitung zum statischen Mischer prozessaufwärts von der direkten Inline-Eindüsung mündet,

- wobei die Ozondosierung weniger als 50 mgO3/g der erzeugten gelösten Feststoffe (Total Suspended Solids, TSS) beträgt, vorzugsweise 30 mgO3/g der erzeugten TSS,

- Zurückführen des aufbereiteten Schlamms in den Belebtschlammtank (20).

2. Verfahren nach Anspruch 1, **dadurch gekennzeichnet, dass** die erforderliche spezifische Gesamtdosis Ozon durch einzelne Mikrodosen Ozon jeweils in der Größenordnung von 8 bis 10 $mgO_3/gTSS_{behandelt}$ erreicht wird und der Schlamm den Mikrodosen mehrmals während des Schlammalters ausgesetzt wird.

3. Verfahren nach Anspruch 1, wobei ein mit Ozon angereichertes Gas prozessaufwärts von der Einwirkung des statischen Mischers eingedüst wird.

4. Verfahren nach Anspruch 1, **dadurch gekennzeichnet, dass** während der Einwirkung des statischen Mischers Eindüsungen von konditionierenden chemischen Produkten in den Schlamm vorgenommen werden, die in der Lage sind, die Effizienz des Prozesses zur Verminderung des Schlamms mit Hilfe von Ozon zu erhöhen.

5. Verfahren nach Anspruch 1, **dadurch gekennzeichnet, dass** eine Phase der zwischenzeitlichen Nitrifikation und Denitrifikation in dem Belebtschlamm-Tank enthalten ist, um die gewünschten Parameter für $N-NH_4$, $N-NO_3$, $O_2$ oder den pH-Wert zu erreichen, die durch Inline-Sonden überwacht werden.

6. Anlage, die zum Ausführen des Verfahrens nach Anspruch 1 gestaltet ist, umfassend:

- einen Belebtschlamm-Tank (20),
- einen Sedimentierungstank (30), der prozessabwärts des Belebtschlamm-Tanks angeschlossen ist,
- Mittel (10, 21) zum Senden des aus dem Sedimentierungstank stammenden Schlamms zu einem Reaktionstank (2) und einem parallel zum Reaktionstank (2) angeordneten statischen Mischer (4),
- wobei der Reaktionstank einen Mikroblasen-Diffusor mit einer Maschenfiltrationsrate von $\leq$ 5 Mikrometer und eine Schlammrückführungsleitung umfasst, die eine Venturi-Ausstoßvorrichtung aufweist,
- Mittel (1) zum Erzeugen eines mit Ozon angereicherten Gases aus Luft,
- Mittel zum Zuführen von mit Ozon angereichertem Gas prozessaufwärts vom statischen Mischer (4), der Venturi-Ausstoßvorrichtung (3) beziehungsweise dem Mikroblasen-Diffusor des Reaktionstanks (2),
- Mittel zum Rückführen des Schlamms vom Reaktionstank und vom statischen Mischer in den Belebtschlamm-Tank.

7. Anlage nach Anspruch 6, **dadurch gekennzeichnet, dass** sie mindestens drei verschiedene Eindüsungsvorrichtungen für mit Ozon angereichertes Gas umfasst, wobei sie ein Kontaktreaktor mit einem Mikroblasen-Diffusor, einer Venturi-Ausstoßvorrichtung und einem statischen Mischer ist.

## Revendications

1. Procédé de réduction de la boue produite dans un processus d'épuration d'eau, comprenant les activités suivantes :

- transport de l'eau à purifier dans une cuve de boue activée (20) ;
- transport de la boue depuis la cuve de boue activée (20) vers une cuve de sédimentation (30) ;
- production d'un gaz enrichi en ozone en partant de l'air ;
- soumission d'une première partie de la boue provenant de la cuve de sédimentation (30) à l'action du gaz enrichi en ozone à un premier point d'injection à l'aide d'une injection directe en ligne en amont d'un mélangeur statique (4) ;
- soumission d'une deuxième partie de la boue provenant de la cuve de sédimentation (30) à l'action du gaz enrichi en ozone à un deuxième point d'injection à l'aide d'un diffuseur de microbulles (2) ayant une filtration par tamis inférieur ou égal à 5 microns dans une cuve de réaction (2) avec un niveau de surface de liquide inférieur à 1 mètre et un temps de contact inférieur à 5 minutes ;
- soumission de la deuxième partie de la boue provenant de la cuve de sédimentation (30) à une action additionnelle du gaz enrichi en ozone à un troisième point d'injection à l'aide d'un éjecteur à venturi (3) pourvu sur une ligne de recyclage (23) de la boue contenue dans la cuve de réaction (2) ; ou

- soumission de la première partie de la boue provenant de la cuve de sédimentation (30) à une action additionnelle du gaz enrichi en ozone à un troisième point d'injection à l'aide d'un éjecteur à venturi (3), pourvu sur une ligne (24) qui s'embranche à partir de la ligne provenant de la cuve de sédimentation et qui rejoint la ligne allant au mélangeur statique en amont de l'injection directe en ligne ;
- dosage d'ozone inférieur à 50 mgO$_3$/gTSS produit, de préférence à 30 mgO$_3$/gTSS produit ;
- retour de la boue traitée vers la cuve de boue activée (20).

2. Procédé selon la revendication 1, **caractérisé en ce que** le dosage général spécifique de l'ozone requis est obtenu avec des microdoses uniques d'ozone, chacune de l'ordre de 8 à 10 mgO$_3$/gTSS$_{traité}$, et **en ce que** la boue est soumise aux microdoses plusieurs fois durant le vieillissement de la boue.

3. Procédé selon la revendication 1, dans lequel un gaz enrichi en ozone est injecté en amont de l'action du mélangeur statique.

4. Procédé selon la revendication 1, **caractérisé en ce que** durant l'action du mélangeur statique, des injections de produits chimiques de traitement qui sont capables d'augmenter l'efficacité du processus de réduction de la boue sont effectuées dans la boue en utilisant de l'ozone.

5. Procédé selon la revendication 1, **caractérisé en ce qu'**une étape de nitrification et dénitrification intermittente est réalisée dans la cuve de boue activée de manière à atteindre les paramètres désirés de N-NH$_4$, N-NO$_3$, O$_2$ ou pH, qui sont contrôlés par des sondes en ligne.

6. Installation configurée pour mettre en oeuvre le procédé selon la revendication 1, comprenant :

- une cuve de boue activée (20) ;
- une cuve de sédimentation (30) connectée en aval de la cuve de boue activée ;
- un moyen (10, 21) pour envoyer la boue de sortie depuis la cuve de sédimentation vers une cuve de réaction (2) et un mélangeur statique (4) agencé en parallèle de la cuve de réaction (4) ;
- la cuve de réaction comprenant un diffuseur à microbulles ayant une filtration par tamis inférieur à 5 microns, et un conduit de recyclage de boue comprenant un éjecteur à venturi (3) ;
- un moyen (1) pour produire un gaz enrichi en ozone en partant de l'air ;
- un moyen pour fournir du gaz enrichi en ozone, respectivement au mélangeur statique en amont (4), à l'éjecteur à venturi (3) et au diffuseur à microbulles de la cuve de réaction (2) ;
- un moyen pour renvoyer la boue depuis la cuve de réaction et depuis le mélangeur statique vers la cuve de boue activée.

7. Installation selon la revendication 6, **caractérisée en ce qu'**elle comprend au moins trois dispositifs d'injection différents de gaz enrichi en ozone, qui sont un réacteur de contact avec un diffuseur de microbulles, un éjecteur de type venturi et un mélangeur statique.

Fig. 1

WASTEWATER

20

TANK OF ACTIVATED
SLUDGE

30

EFFLUENT

SEDIMENTATION TANK

25

AIR

5    11

3

21

22

TO SLUDGE
TREATMENT

10

4

5

2

1

40    AIR

Fig. 2

WASTEWATER

20

TANK OF ACTIVATED
SLUDGE

30

SEDIMENTATION TANK

EFFLUENT

AIR

21

22

TO SLUDGE
TREATMENT

24

5

10

11

4

2

1

40

AIR

Fig. 3

Fig. 4

Fig. 5

Fig. 6

Fig. 7

Fig. 8

Fig. 9

Liquid column height (cm)

Fig. 10

Fig. 11

Fig. 12